# EUROPÄISCHE PATENTSCHRIFT

(11) **EP 1 522 429 B1**
(45) Veröffentlichungstag und Bekanntmachung des Hinweises auf die Patenterteilung: **22.03.2006**
(21) Anmeldenummer: 04021975.0
(22) Anmeldetag: 16.09.2004
(51) Int. Cl.: B60D 1/04

(54) **Kupplungshaken**
Coupling hook
Crochet d'attelage

(30) Priorität: 08.10.2003 DE 10347288
(43) Veröffentlichungstag der Anmeldung: 13.04.2005
(73) Patentinhaber: GKN Walterscheid GmbH, 53797 Lohmar (DE)
(72) Erfinder: Ollefs, Horst, 47447 Moers (DE); Laubner, Joachim, 53474 Bad Neuenahr/Ahrweiler (DE)
(74) Vertreter: Harwardt, Günther

(56) Entgegenhaltungen:
- DE-A- 10 122 926
- GB-A- 1 533 862
- US-A- 4 014 562
- US-A- 4 071 263
- US-A- 5 441 117

## Beschreibung

Die Erfindung betrifft einen Kupplungshaken, insbesondere für einen Unterlenker einer Dreipunktanbauvorrichtung eines Traktors,
- mit einem Hakenkörper der
   - eine Lagerausnehmung zur Aufnahme einer Lagerkugel eines anzubauenden Gerätes aufweist,
   - eine Ausnehmung aufweist,
   - einem Durchbruch zwischen der Ausnehmung und der Lagerausnehmung aufweist,
   - eine Austrittsöffnung, die mit der Ausnehmung verbunden und zur Außenumgebung offen ist, weist
   - ein Stützelement auf, das die Austrittsöffnung durchquert und diese in einen ersten Öffnungsbereich und einen zweiten Öffnungsbereich teilt,
- mit einer Sperrklinke, die
   - zwischen einer Sperrposition, in der sie in die Lagerausnehmung vorragt und einer Löseposition, in der sie in den Durchbruch zurückgezogen ist, verstellbar ist,
   - mit einem Öffnungshebel, der
   - mit der Sperrklinke schwenkbeweglich verbunden ist,
durch den ersten Öffnungsbereich nach außen über den Hakenkörper vortritt.

In der DE 42 35 780 C1 ist ein Kupplungshaken für einen Unterlenker einer Dreipunktanbauvorrichtung eines Traktors beschrieben. Dieser Kupplungshaken umfaßt einen Hakenkörper mit einer Lagerausnehmung zur Aufnahme einer Lagerkugel eines anzubauenden Gerätes. In den Hakenkörper ist eine Ausnehmung eingeformt.

Diese ist durch Durchbruch zwischen der Ausnehmung und der Lagerausnehmung zur Lagerausnehmung offen. Ferner ist eine Austrittsöffnung vorgesehen, die mit der Ausnehmung verbunden und zur Außenumgebung offen ist.

Am Hakenkörper befinden sich ein erstes Stützelement und ein zweites Stützelement. Das zweite Stützelement ist in Form eines Spannstiftes vorgesehen, der die Austrittsöffnung durchquert und diese in einen ersten Öffnungsbereich und in einen zweiten Öffnungsbereich tellt.

Der Kupplungshaken umfaßt ferner eine Sperrklinke, die zwischen einer Sperrposition, in der sie in die Lagerausnenmung vorragt, und einer Löseposition, in der sie in den Durchbruch zurückgezogen ist, verstellbar ist. Die Sperrklinke weist eine Sperrfläche auf, die in der Sperrposition dem zweiten Stützelement gegenübersteht, so dass die Sperrklinke in der Sperrposition gesichert ist. In der Sperrposition ist die Sperrklinke zur Abstützung gegen das erste Stützelement durch ein Stellelement beaufschlagt. Das Stellelement ist als Feder gestaltet. Es greift einerseits am Hakenkörper und andererseits an der Sperrklinke an. Es beaufschlagt die Sperrklinke zur Einnahme der Sperrposition. Ferner umfaßt der Kupplungshaken einen Öffnungshebel, der mit der Sperrklinke schwenkbeweglich verbunden ist und der beweglich an dem zweiten Stützelement abgestützt ist. Der Öffnungshebel ist durch den ersten Öffnungsbereich nach außen herausgeführt und tritt nach außen über den Hakenkörper vor. Ferner weist er eine Sperrnase auf, die zur Festlegung des Öffnungshebels in einer Halteposition dient. In dieser Halteposition, die durch Verschwenken, beispielsweise durch Einwirken mit dem Fuß einer Bedienungsperson, erreichbar ist, stützt sich die Sperrnase an einer Außenkante des Hakenkörpers, die dem zweiten Öffnungsbereich benachbart ist, ab. Ferner stützt sich der Öffnungshebel zusätzlich auf dem zweiten Stützelement des Hakenkörpers ab. Für die Überführung in die Löseposition und das Halten derselben in dieser Löseposition ist es erforderlich, den Öffnungshebel so weit aus dem Hakenkörper herauszuziehen, dass er sich in die Halteposition schwenken läßt. Der Kraftaufwand hierfür ist groß, und darüber hinaus muß der dazu erforderliche Bewegungsfreiraum zur Verfügung gestellt werden. Der Öffnungshebel steht relativ weit über die Außenkontur des Hakenkörpers nach au-ßen vor. Die vorbeschriebene zweiphasige Handhabung und Bewegung ist kompliziert.

Die US 6 058 633 A beschreibt eine Schnellkupplung für Erdbewegungsmaschinen, bei denen mittels dieser Schnellkupplung beispielsweise eine Schaufel an einem Arm festgelegt werden soll. Hierzu sind am Arm hakenförmige Kuppelelemente vorgesehen, die Bolzen aufnehmen. Die Bolzen werden durch Sperrelemente, die an einem Sperrhebel angelenkt sind, in dem Haken eingeschlossen gehalten. Die Sperrhebel werden jeweils durch einen einseitig wirkenden Druckzylinder beaufschlagt.

Der Erfindung liegt die Aufgabe zugrunde, einen Kupplungshaken bereit zu stellen, bei dem die Bewegungsabläufe von der Sperrposition in die Löseposition vereinfacht sind, um die Bedienung günstiger zu gestalten.

Diese Aufgabe wird erfindungsgemäß dadurch gelöst, dass der Öffnungshebel eine Sperrnase aufweist, die den Öffnungshebel in der Halteposition dadurch festlegt, dass sie in dem zweiten Öffnungsbereich zwischen dem Stützelement und einer diesem gegenüberliegenden Begrenzungskante des zweiten Öffnungsbereichs gehalten ist und ein Rückschwenken des Öffnungshebels aus der Halteposition verhindert.

Von Vorteil hierbei ist, dass sich die Handhabung insofern deutlich vereinfacht hat, als für die Bewegung der Sperrklinke von der Sperrposition in die Löseposition nur eine Schwenkbewegung des Öffnungshebels um das zweite Stützelement erforderlich ist. Eine Drehbewegung ist hinsichtlich des erforderlichen Kraftaufwandes günstig.

Wenn ein bestimmter Schwenkwinkel des Öffnungshebels überschritten wird, kann die Sperrnase unter der Wirkung des Stellelementes zur Festlegung in den zweiten Öffnungsbereich eintreten und sich an einer dem Stützelement gegenüber liegenden Begrenzungskante des zweiten Öffnungsbereiches abstützen. Ein wesentlicher Vorteil der erfindungsgemäßen Lösung besteht darin, dass durch die Schwenkbewegung eine einphasige Betätigung gegeben ist. Es muß nicht mehr der Öffnungshebel um ein erhebliches Maß aus dem Hakenkörper herausgezogen und dann verschwenkt werden. Der Überstand des Öffnungshebels in der Halteposition über die Außenkante des Hakenkörpers im Bereich der Austrittsöffnung ist verringert, so dass die Gefahr der Kollision mit dem anzubauenden Gerät verringert ist.

Eine Sperrfläche kann, wie in der DE 42 35 780 C1 beschrieben, am Ende der Sperrklinke ausgebildet sein und dem zweiten Stützelement in der Sperrposition gegenüberstehen oder sie kann an der Unterkante der Sperrklinke im Bereich einer Ausnehmung angeordnet sein und dem ersten Stützelement in der Sperrposition gegenüberstehen, wie es in der DE 43 15 811 C1 beschrieben ist.

In Ausgestaltung der Erfindung ist vorgesehen, dass ein Stellelement vorgesehen ist, welches einerseits am Hakenkörper und andererseits an der Sperrklinke angreift und diese zur Einnahme der Sperrposition beaufschlagt, und dass das Stellelement eine Kraftbeaufschlagung bewirkt, die ein Eintreten der Sperrnase in den zweiten Öffnungsbereich unterstützt.

Bevorzugt ist vorgesehen, dass der Hakenkörper ein erstes Stützelement und ein zweites Stützelement aufweist, wobei das zweite Stützelement das Stützelement ist, das die Austrittsöffnung durchquert und diese in einen ersten Öffnungsbereich und einen zweiten Öffnungsbereich teilt, das erste Stützelement zur Abstützung der Sperrklinke in der Sperrposition dient.

Besonders günstige Stellverhältnisse ergeben sich, wenn vorgesehen ist, dass das Stellelement so mit dem Hakenkörper und der Sperrklinke verbunden ist, dass eine von dem Stellelement definierte Kraftwirkungslinie mit einer gedachten Verbindungslinie zwischen der von dem zweiten Stützelement gebildeten Schwenkachse für den Öffnungshebel und dem Zentrum des Befestigungselementes für das Stellelement am Hakenkörper in der Sperrposition einen ersten Winkel von 10° bis 14°, vorzugsweise 12°, und in der Halteposition einen zweiten Winkel von 0° bis 4°, vorzugsweise 2° einschließt.

Wenn nicht gewünscht ist, dass ein selbsttätiges, sondern nur ein von einer Bedienungsperson bewusst ausgelöstes Eintreten in die Halteposition erfolgen soll, ist vorgesehen, dem Öffnungshebel ein Federelement zuzuordnen, das bei Bewegung des Öffnungshebels ein selbsttätiges Eintreten der Sperrnase in den zweiten Öffnungsbereich verhindert. Nach Überschreiten der Haltekraft des Federelementes bei Bedienung durch eine Person kann der Öffnungshebel mit der Sperrnase in den zweiten Öffnungsbereich eintreten und die Sperrklinke in der Löseposition festsetzen.

Bei einer ersten Ausführungsform ist vorgesehen, dass das Stellelement als Schraubenzugfeder gestattet ist. Alternativ ist vorgesehen, dass das Stellelement als ein mit Druckmittel einseitig beaufschlagbares Linearstellelement dargestellt ist, das durch Druckbeaufschlagung in eine ausgefahrene Position überführbar ist und bei Druckentlastung selbsttätig wieder die eingefahrene Ausgangsposition einnimmt. Eine solche Ausführungsform fordert, um ein automatisches Einrasten des Öffnungshebels in der Halteposition zu verhindern, ein Federelement, das das selbsttätige Eintreten der Sperrnase verhindert. Bei der Ausführungsform, die eine Schraubenzugfeder als Stellelement nutzt, wird bei Betätigung durch die Bedienungsperson beispielsweise per Seilzug der Schwenkwinkel des Öffnungshebels vorgegeben, so dass vorgegeben ist, ob ein automatisches Einrasten in die Halteposition erfolgen kann oder nicht.

Vorzugsweise ist in Ausgestaltung der Erfindung vorgesehen, dass der Öffnungshebei einen einseitig durch die Sperrnase begrenzten Schlitz aufweist, den das zweite Stützelement durchgreift. Ferner ist es günstig, wenn das erste und das zweite Stützelement jeweils durch einen Stift dargestellt sind. Dabei können die Stifte als Spannstifte gestaltet sein.

In Ausgestaltung des Federelementes ist vorgesehen, dass sich bei Bewegung des Öffnungshebels zur Löseposition bzw. Halteposition hin an den Hakenkörper außen anlegt. Vorzugsweise ist dabei das Federelement stabförmig oder blattfederartig gestaltet und einseitig am Öffnungshebel festgelegt und von diesem vorstehend angeordnet.

Zwei bevorzugte Ausführungsbeispiele der Erfindung sind der Zeichnung schematisch dargestellt.

Es zeigt
- Fig. 1: eine Seitenansicht eines Traktors und einen Abschnitt eines daran anzubauenden Anbaugerätes,
- Fig. 2: eine Seitenansicht einer ersten Ausführungsform eines Kupplungshakens, wobei die Sperrklinke in der Sperrposition gezeichnet ist und ein Deckelelement entfernt ist, um die Sicht auf die Sperrklinke und das als Schraubenzugfeder gestaltete Stellelement freizugeben,
- Fig. 3: den Kupplungshaken von Fig. 2 bei in Löseposition befindlicher Sperrklinke und in Halteposition befindlichem Öffnungshebel,
- Fig. 4: eine Seitenansicht auf einen Kupplungshaken in einer zweiten Ausführungsform, wobei gegenüber der Ausführungsform gemäß Fig. 1 und 2 ein druckmittelbeaufschlagbares Linearstelleiement als Stellelement verwendet wird und sich die Sperrklinke in der Sperrposition befindet, und
- Fig. 5: eine Seitenansicht des Kupplungshakens gemäß Fig. 4, wobei sich die Sperrklinke in der Löseposition und der Öffnungshebel in der Halteposition befindet.

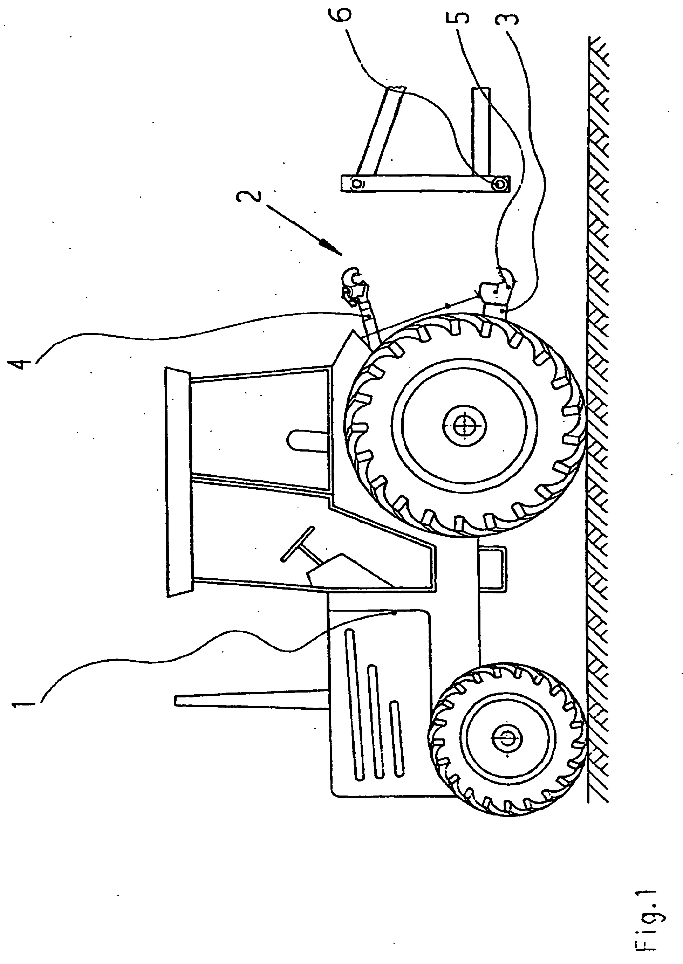

In Fig. 1 ist ein Traktor 1 in Seitenansicht mit einer Dreipunktanbauvorrichtung 2 an seinem Heck dargestellt. Eine entsprechende Dreipunktanbauvorrichtung kann an der Frontseite des Traktors angebaut sein. Die Dreipunktanbauvorrichtung 2 umfaßt zwei von einer Längsachse des Traktors 1 entgegengesetzt seitlich mit Abstand angeordnete Unterlenker 3, von denen nur einer sichtbar ist, weil der andere in der Zeichenebene hinter dem sichtbaren Unterlenker 3 angeordnet ist. Die Unterlenker 3 werden von einem nicht dargestellten Kraftheber gleichzeitig oder von unabhängigen Kraftantrieben einzeln in ihrer Höhenlage verstellt, so dass die am freien Ende der beiden Unterlenker 3 angebrachten Kupplungshaken 5 in ihrer Höhenlage zum Boden, auf dem der Traktor 1 mit seinen Rädern aufsteht, verändert werden können.

Die Dreipunktanbauvorrichtung 2 umfaßt ferner einen Oberlenker 4, der oberhalb der Unterlenker 3 am Heck des Traktors 1 angelenkt ist. Der Oberlenker 4 ist mittig, d.h. auf der Längsachse des Traktors 1 zentriert am Traktorheck oberhalb der Unterlenker 3 angelenkt.

An einem nicht näher dargestellten Anbaugerät befindet sich ein Kuppelrahmen, der insgesamt drei Kuppelpunkte umfaßt, welche auf einen Zapfen aufgesteckte und befestigte Lagerkugeln aufweisen. Es ist eine Lagerkugel 6 sichtbar, die dazu bestimmt ist, mit dem sichtbaren Kupplungshaken 5 verbunden zu werden.

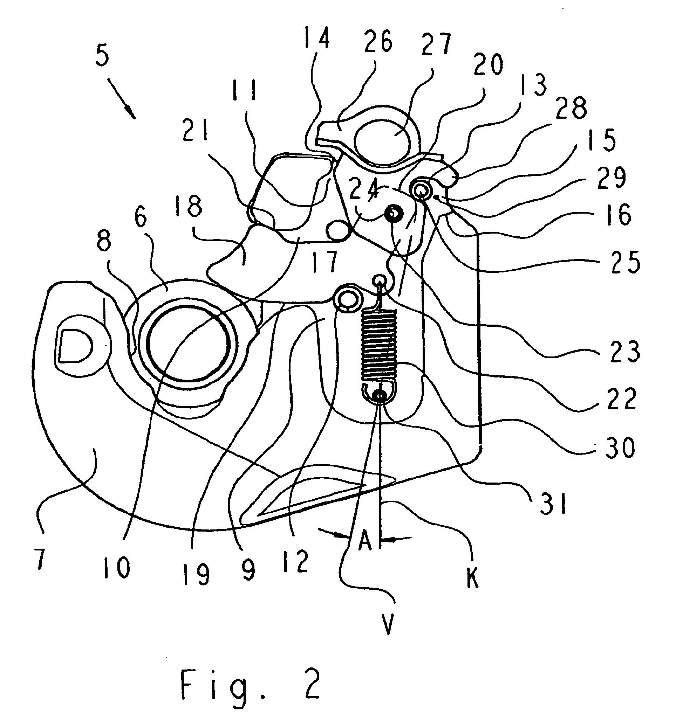

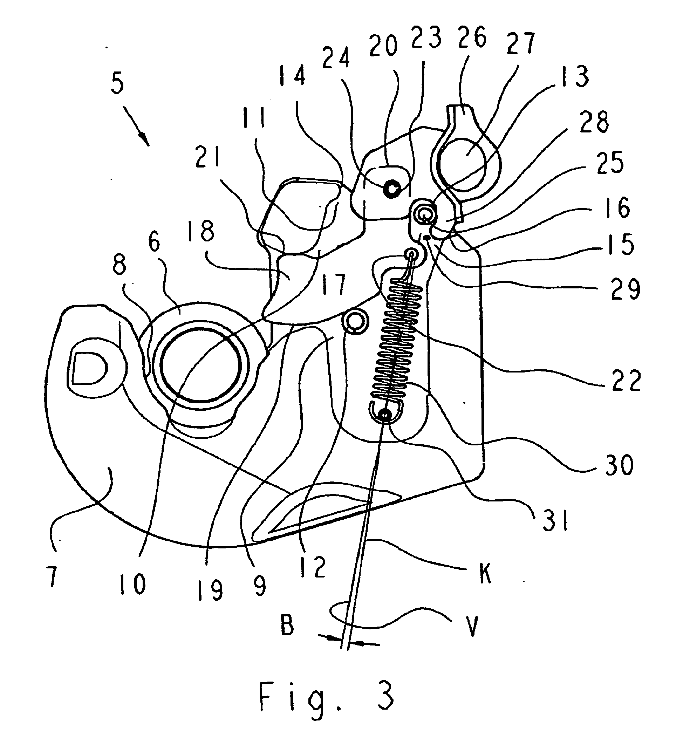

Nachfolgend wird eine erste Ausführungsform eines Kupplungshakens 5 gemäß der Erfindung anhand der Fig. 2 und 3 näher beschrieben. Der Kupplungshaken 5 weist einen Hakenköper 7 auf, der beispielsweise ein Schmiedeteil ist. Dieser weist eine Lagerausnehmung 8 auf, die kugelig gestaltet ist und die aus Fig. 1 ersichtliche Lagerkugel 6 im gekuppelten Zustand aufnimmt. Der Hakenkörper 7 umfaßt eine Ausnehmung 9, die normalerweise durch einen nicht dargestellten Deckel geschlossen ist, der aber, um die Einzelteile besser beschreiben zu können, fortgelassen wurde. Die Ausnehmung 9 ist über einen Durchbruch 10 mit der Lagerausnehmung 8 verbunden. Ferner ist eine Austrittsöffnung 11 vorgesehen, die die Ausnehmung 9 mit der Außenumgebung verbindet. In der Ausnehmung 9 befindet sich ein erstes Stützelement 12 in Form eines Spannstiftes und dazu beanstandet zur Austrittsöffnung 11 hin ein diese querendes zweites Stützelement 13 in Form eines weiteren Spannstiftes. Durch das zweite Stützelement 13 in Form des Spannstiftes wird die Austrittsöffnung 11 in einen ersten Öffnungsbereich 14 und einen zweiten Öffnungsbereich 15 geteilt, wobei der zweite Öffnungsbereich 15 durch das zweite Stützelement 13 und diesem gegenüberliegend eine Begrenzungskante 16 des Hakenkörpers 7 begrenzt ist. In der Ausnehmung 9 ist eine Sperrklinke 17 aufgenommen, die gebogen ist und die einen Riegelabschnitt 18 aufweist, der in der in Fig. 2 dargestellten Sperrposition in die Lagerausnehmung 8 vorragt und die Lagerkugel 6 in der Lagerausnehmung 8 hält. Die Sperrklinke 17 ist mit ihrer Unterkante 19 auf dem ersten Stützelement 12 abgestützt geführt. Die Sperrklinke 17 weist dem Riegelabschnitt 18 entfernt einen Vorsprung auf, der sich gegen das erste Stützelement 12 in der Sperrposition abstützt.

Die Sperrklinke 17 ist an ihrem dem Riegelabschnitt 18 entfernten Ende mit einer Sperrfläche 20 versehen, die sich bei Beaufschlagung der Sperrklinke 17 im Bereich des Riegelanschnittes 18 gegen das zweite Stützelement 13 in Form des Spannstiftes abstützt, so dass die Sperrklinke 17 in der Sperrposition gesichert ist.

Die Oberkante 21 der Sperrklinke 17 stützt sich bei Belastung der Sperrklinke 17 im Bereich des Riegelabschnittes 18 durch die Lagerkugel 6 gegen die Begrenzung des Durchbruchs 10 nach oben (von der Lagerausnehmung 8 weg) ab. Im Bereich des Vorsprungs der Sperrklinke 17, der sich in der Sperrposition nahe zum ersten Stützelement 12 befindet, befindet sich eine Haltebohrung 22.

Ferner ist nahe zu der Sperrfläche 20 in die Sperrklinke 17 ein Lagerstift 23 eingesetzt, der die Lagerachse 24 definiert. Über den Lagerstift 23 ist ein Öffnungshebel 26 schwenkbar mit der Sperrklinke 17 verbunden. Der Öffnungshebel 26 weist ferner eine Einhängebohrung 27 für beispielsweise ein Seil auf.

Der Öffnungshebel 26 ist mit einem Schlitz 29 versehen, der von einer Sperrnase 28 begrenzt wird. Mit dem Schlitz 29 übergreift der Öffnungshebel 26 schwenkbar das als Spannstift gestaltete zweite Stützelement 13 und sitzt auf diesem. Das zweite Stützelement 13 bildet für den Öffnungshebel 26 die Schwenkachse 25. Der Öffnungshebel 26 tritt durch den ersten Öffnungsbereich 14 nach außen aus dem Hakenkörper 7 heraus.

In dem Hakenkörper 7 befindet sich des weiteren ein Einhängestift 31, der ein Befestigungselement für eine Schraubenzugfeder 30, die ein Stellelement darstellt, bildet. Das andere Ende der Schraubenzugfeder 30 ist in die Haltebohrung 22 eingehängt. Die Schraubenzugfeder 30 zieht die Sperrklinke 17 in die in Fig. 2 dargestellte Sperrposition. Zum Bewegen der Sperrklinke 17 von der Sperrposition gemäß Fig. 2 in die Löseposition bzw. Halteposition gemäß Fig. 3 wird der Öffnungshebel 26 über einen Seilzug um die Schwenkachse 25, die von dem zweiten Stützelement 13 gebildet wird, im rechtsschwenkenden Sinne verschwenkt, wodurch die Sperrklinke 17 mit ihrem Riegelaibschnitt 18 den Bereich der Lagerausnehmung 8 verläßt und in den Durchbruch 10 zurückweicht. Für das Verschwenken ist die Kraft der Schraubenzugfeder 30 zu überwinden. Soll die Sperrklinke 17 in der Löseposition gehalten werden, ist der Öffnungshebel 26 so weit zu verschwenken, dass die Sperrnase 28 in den zweiten Öffnungsbereich 15 zwischen dem zweiten Stützelement 13 und der Begrenzungskante 16 eintauchen kann und sich gegen die Begrenzungskante 16 abstützen kann. Hierbei wird der Öffnungshebel 26 in diese Position durch die Schraubenzugfeder 30 gezogen, deren Wirkungslinie K in der Sperrposition zu einer gedachten Verbindungslinie V zwischen der von dem zweiten Stützelement 13 gebildeten Schwenkachse 25 für den Öffnungshebel 26 und dem Zentrum des Befestigungselementes 31 für die Schraubenzugfeder 30 als Stellelement am Hakenkörper 7 einen ersten Winkel A von 10° bis 14°, vorzugsweise 12° einnimmt. In der Halteposition ist vorzugsweise ein zweiter Winkel B von 0° bis 4°, insbesondere 2° vorgesehen.

Sollen der Öffnungshebel 26 und damit die Sperrklinke 17 wieder in die Sperrposition überführt werden, muß auf den Öffnungshebel 26 im linksschwenkenden Sinne eingewirkt werden, so dass die Sperrnase 28 wieder aus dem zweiten Öffnungsbereich 15 und aus der Anlage zur Begrenzungskante 16 heraustreten kann und die Sperrklinke 17 unter der Wirkung der Schraubenzugfeder 30 wieder die in Fig. 2 dargestellte Sperrposition einnehmen kann. Wird auf den Öffnungshebel 26 für die Bewegung in die Löseposition nur so weit im schwenkenden Sinne eingewirkt, dass die Sperrnase 28 nicht in den zweiten Öffnungsbereich 15 eintreten kann, nimmt die Sperrklinke 17 automatisch unter der Wirkung der Schraubenzugfeder 30 die Sperrposition gemäß Fig. 2 wieder ein, wenn die Krafteinwirkung entfällt

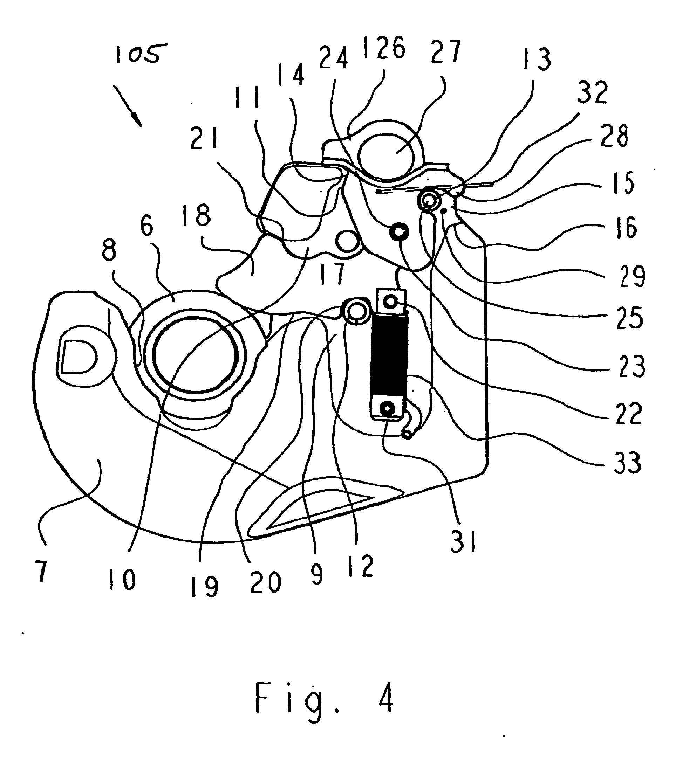

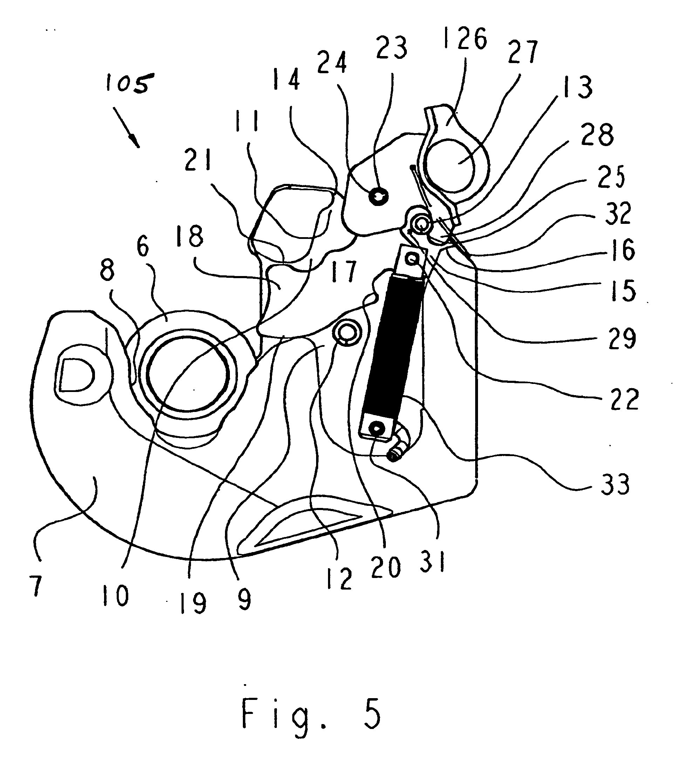

In den Fig. 4 und 5 ist ein Kupplungshaken 105 dargestellt, der sich in den nachfolgend beschriebenen Merkmalen von der Ausführungsform gemäßFig. 2 und 3 unterscheidet Im übrigen entspricht der Kupplungshaken 105 gemäß Fig. 4 und 5 dem Aufbau des Kupplungshakens 5 gemäß Fig. 2 und 3, so dass die gleichen Bezugszeichen für gleiche Elemente und Abschnitte verwendet werden. Hinsichtlich der Beschreibung derselben wird zu der Beschreibung bezüglich der Ausführungsform des Kupplungshakens 5 gemäß Fig. 2 und 3 verwiesen.

Der Kupplungshaken 105 gemäß Fig. 4 und 5 unterscheidet sich von dem gemäß Fig. 2 und 3 dadurch, dass das bei dem Kupplungshaken 5 vorgesehene Stellelement in Form einer Schraubenzugfeder durch ein Linearstellelement 33 ersetzt ist, welches über eine Druckmittelleitung und eine Druckquelle und Schalteinrichtungen mit Druckluft oder Drucköl beaufschlagbar ist und seine Länge verändert. Es kann beispielsweise in Form eines druckluftbeaufschlagbaren Plungerzylinders gestaltet sein. Vorzugsweise ist jedoch eine Gestaltung entsprechend der deutschen Patentanmeldung 103 39 819.8 zu wählen.

Bei einem solchen Linearstellelement 33 wird grundsätzlich immer die voll ausgefahrene Position bei Druckbeaufschlagung eingenommen. Bei Druckentlastung nimmt, wenn es nicht daran gehindert wird, das Linearstellelement 33 automatisch wieder die eingezogene Position ein. Da bei solch einer Betätigung nicht eine Löseposition erreicht wird, in der die Sperrklinke 7 wieder in ihre Sperrposition automatisch zurückkehren kann, sondern die Sperrnase 28 in den zweiten Öffnungsbereich 15 einfällt, ist dem Öffnungshebel 26 ein Federelement 32 zugeordnet, das blattfederartig gestaltet ist. Das Federelement 32 ist in einer Ausnehmung des Öffnungshebels 26 so gehalten, dass sein freies Ende über die Außenkontur des Öffnungshebels 26 vorsteht, wobei sich dieser Bereich des blattfederartigen oder als Stab gestalteten Federelementes 32 gegen die Außenkante des Hakenkörpers 7 im Bereich der Austrittsöffnung 11 und dort insbesondere an den außen angrenzenden Bereich zur Begrenzungskante 16 des Hakenkörpers 7 anlegt, so dass der Öffnungshebel 26 mit seiner Sperrnase 28 nur dann zum Eintreten in den zweiten Öffnungsbereich 15 freigegeben wird, wenn bewußt durch eine Bedienungsperson auf den Öffnungshebel 26 im rechtsschwenkenden Sinne eingewirkt wird, so dass das Federelement 32 ausweicht und die Sperrnase 28 in den zweiten Öffnungsbereich 15 eintreten kann. Das Lösen dieser Halteposition muß ebenfalls wissentlich vom Bediener erfolgen. Ferner ist die Sperrfläche 20 in diesem Fall einer Ausnehmung in der Unterkante 19 der Sperrklinke 17 zugeordnet. Diese wirkt mit dem ersten Stützelement 12 zusammen. Die Ausnehmung mit der Sperrfläche 20 ist nahe zum Vorsprung mit der Haltebohrung 22 angeordnet.

### Bezugszeichenliste

- 1: Traktor
- 2: Dreipunktanbauvorrichtung
- 3: Unterlenker
- 4: Oberlenker
- 5, 105: Kupplungshaken
- 6: Lagerkugel
- 7: Hakenkörper
- 8: Lagerausnehmung
- 9: Ausnehmung
- 10: Durchbruch
- 11: Austrittsöffnung
- 12: Erstes Stützelement/Spannstift
- 13: zweites Stützelement/Spannstift
- 14: erster Öffnungsbereich
- 15: zweiter Öffnungsbereich
- 16: Begrenzungskante
- 17: Sperrklinke
- 18: Riegelabschnitt
- 19: Unterkante
- 20: Sperrfläche
- 21: Oberkante
- 22: Haltebohrung
- 23: Lagerstift
- 24: Lagerachse
- 25: Schwenkachse
- 26,126: Öffnungshebel
- 27: Einhängebohrung
- 28: Sperrnase
- 29: Schlitz
- 30: Schraubenzugfeder/Stelielement
- 31: Einhängestift/Befestigungselement
- 32: Federelement
- 33: Linearstellelement/Stelletement
- A: Winkel
- B: Winkel
- K: Kraftwirkungslinie
- V: Verbindungslinie

## Patentansprüche

1. Kupplungshaken (5,105), insbesondere für einen Unterlenker einer Dreipunktanbauvorrichtung (2) eines Traktors (1),
- mit einem Hakenkörper (7), der
- eine Lagerausnehmung (8) zur Aufnahme einer Lagerkugel (6) eines anzubauenden Gerätes aufweist,
- eine Ausnehmung (9) aufweist,
- einen Durchbruch (10) zwischen der Ausnehmung (9) und der Lagerausnehmung (8) aufweist,
- eine Austrittsöffnung (11), die mit der Ausnehmung (9) verbunden und zur Außenumgebung offen ist, aufweist.
- ein Stützelement (13) aufweist, das die Austrittsöffnung (11) durchquert und diese in einen ersten Öffnungsbereich (14) und einen zweiten Öffnungsbereich (15) teilt
- mit einer Sperrklinke (17), die
- zwischen einer Sperrposition, in der sie in die Lagerausnehmung (8) vorragt, und einer Löseposition, in der sie in den Durchbruch (10) zurückgezogen ist, verstellbar ist,
- mit einem Öffnungshebel (26,126), der
- mit der Sperrklinke (17) schwenkbeweglich verbunden ist,
- durch den ersten Öffnungsbereich (14) nach außen über den Hakenkörper (7) vortritt,
**dadurch gekennzeichnet,**
**dass** der Öffnungshebel (26,126) eine Sperrnase (28) aufweist, die den Öffnungshebel (26, 126) in der Halteposition **dadurch** festlegt, dass sie in dem zweiten Öffnungsbereich (15) zwischen dem Stützelement (13) und einer diesem gegenüberliegenden Begrenzungskante des zweiten Öffnungsbereichs (15), gehalten ist und ein Rückschwenken des Öffnungshebels (26, 126) aus der Halteposition verhindert.

2. Kupplungshaken nach Anspruch 1
**dadurch gekennzeichnet,**
**dass** ein Stellelement (30,33) vorgesehen ist, welches einerseits am Hakenkörper (7) und andererseits an der Sperrklinke (17) angreift und diese zur Einnahme der Sperrposition beaufschlagt,
und **dass** das Stellelement (30, 33) eine Kraftbeaufschlagung bewirkt, die ein Eintreten der Sperrnase (28) in den zweiten Öffnungsbereich (15) unterstützt.

3. Kupplungshaken nach Anspruch 1,
**dadurch gekennzeichnet,**
**dass** der Hakenkörper (7) ein erstes Stützelement (12) und ein zweites Stützelement (13) aufweist, wobei das zweite Stützelement (13) das Stützelement ist, das die Austrittsöffnung (11) durchquert und diese in einen ersten Öffnungsbereich (14) und einen zweiten Öffnungsbereich teilt, und dass das erste Stützelement zur Abstützung der Sperrklinke (17) in der Sperrposition dient.

4. Kupplungshaken nach Anspruch 2,
**dadurch gekennzeichnet,**
**dass** das Stellelement (30,33) so mit dem Hakenkörper (7) und der Sperrklinke (17) verbunden ist, dass eine von dem Stellelement (30,33) definierte Kraftwirkungslinie (K) mit einer gedachten Verbindungslinie (V) zwischen der von dem zweiten Stützelement (13) gebildeten Schwenkachse (25) für den Öffnungshebei (26,126) und dem Zentrum des Befestigungselementes (31) für das Stellelement (30,33) am Hakenkörper (7) in der Sperrposition einen ersten Winkel (A) von 10° bis 14° und in der Halteposition einen zweiten Winkel (B) von 0° bis 4° einschließt.

5. Kupplungshaken nach Anspruch 1,
**dadurch gekennzeichnet,**
**dass** dem Öffnungshebel (126) ein Federelement (32) zugeordnet ist, das bei Bewegung des Öffnungshebels (126) ein selbsttätiges Eintreten der Sperrnase (28) in den zweiten Öffnungsbereich (15) verhindert.

6. Kupplungshaken nach einem der Ansprüche 2 bis 5,
**dadurch gekennzeichnet,**
**dass** das Stellelement als Schraubenzugfeder (30) gestaltet ist.

7. Kupplungshaken nach Anspruch 5,
**dadurch gekennzeichnet,**
**dass** das Stellelement als ein mit Druckmittel einseitig beaufschlagbares Linearstellelement (33) dargestellt ist, das durch Druckbeaufschlagung in eine ausgefahrene Position überführbar ist und bei Druckentlastung selbsttätig wieder in die eingefahrene Ausgangsposition überführbar ist.

8. Kupplungshaken nach Anspruch 2,
**dadurch gekennzeichnet,**
**dass** der Öffnungshebel einen einseitig durch die Sperrnase (28) begrenzten Schlitz (29) aufweist, den das zweite Stützelement (13) durchgreift.

9. Kupplungshaken nach Anspruch 1,
**dadurch gekennzeichnet,**
**dass** das zweite Stützelement (13) durch einen Stift dargestellt ist.

10. Kupplungshaken nach Anspruch 3
**dadurch gekennzeichnet,**
**dass** das erste Stützelement (12) durch einen Stift dargestellt ist.

11. Kupplungshaken nach einem der Ansprüche 9 oder 10,
**dadurch gekennzeichnet,**
**dass** der Stift als Spannstift ausgebildet ist.

12. Kupplungshaken nach Anspruch 5,
**dadurch gekennzeichnet,**
**dass** das Federelement (32) bei Bewegung des Öffnungshebels (126) sich an den Hakenkörper (7) außen anlegt.

13. Kupplungshaken nach einem der Ansprüche 5 oder 12,
**dadurch gekennzeichnet,**
**dass** das Federelement (32) stabförmig oder blattfederartig gestaltet ist und einseitig am Öffnungshebel (126) festgelegt ist und von diesem vorsteht.

## Claims

1. Coupling hook (5, 105), especially for a lower steering arm of a three-point attaching device (2) of a tractor (1), comprising
- a hook body (7), which
- has a bearing recess (8) for receiving a bearing ball (6) of a to be coupled implement,
- has a recess (9),
- has a through opening (10) between the recess (9) and the bearing recess (8),
- has an exiting opening (11), connected to the recess (9) and open towards the exterior,
- has a support element (13), crossing the exiting opening (11) and separating this exiting opening (11) into a first opening portion (14) and a second opening portion (15),
- a locking pawl (17), which
- is displaceable between a locking position, in which it projects into the bearing recess (8), and a detaching position, in which it retreats into the through opening (10),
- an opening lever (26, 126), which
- is pivotably connected to the locking pawl (17),
- projects through the first opening portion (14) outwards over the hook body (7),
**characterised in that**
the opening lever (26, 126) has a locking projection (28), which retains the opening lever (26, 126) in the holding position such, that it is held in the second opening portion (15) between the support element (13) and a limiting edge of the second opening portion (15) arranged opposed to the support element (13), and which locking projection (28) prevents a pivoting back of the opening lever (26, 126) from the holding position.

2. Coupling hook according to claim 1,
**characterised in that**
an adjustment element (30, 33) is provided, which on the one hand engages on the hook body (7) and on the other hand on the locking pawl (17) and urges the same for taking up the locking position,
and that the adjustment element (30, 33) produces a force loading, supporting an entering of the locking projection into the second opening portion (15).

3. Coupling hook according to claim 1,
**characterised in that**
the hook body (7) has a first support element (12) and a second support element (13), wherein the second support element (13) is the support element, which crosses the exiting opening (11) and separates the same into a first opening portion (14) and a second opening portion, and that the first support element serves for supporting the locking pawl (17) in the locking position.

4. Coupling hook according to claim 2,
**characterised in that**
the adjustment element (30, 33) is connected to the hook body (7) and the locking pawl (17) such, that a force acting axis (K), defined by the adjustment element (30, 33), encloses together with an imaginary connection line (V) between the pivot axis (25) formed by the second support element (13) for the opening lever (26, 126) and the centre of the attachment element (31) for the adjustment element (30, 33) on the hook body (7) in the locking position a first angle (A) of 10° to 14° and in the holding position a second angle (B) of 0° to 4°.

5. Coupling hook according to claim 1,
**characterised in that**
to the opening lever (126) a spring element (32) is arranged, which spring element (32) prevents a self-actuated entering of the locking projection (28) into the second opening portion (15), when moving the opening lever (126).

6. Coupling hook according to one of claims 2 to 5,
**characterised in that**
the adjustment element is formed as a helical tensioning spring (30).

7. Coupling hook according to claim 5,
**characterised in that**
the adjustment element is represented by a single-action linear adjustment element (33) pressurizable by pressure means and which can be displaced by pressurization into an extended position and upon pressure release can be displaced by self-actuation again back into the retracted starting position.

8. Coupling hook according to claim 2,
**characterised in that**
the opening lever has a slot (29) limited on one side by the locking projection (28), through which slot (29) the second support element (13) extends through.

9. Coupling hook according to claim 1,
**characterised in that**
the second support element (13) is represented by a pin.

10. Coupling hook according to claim 3,
**characterised in that**
the first support element (12) is represented by a pin.

11. Coupling hook according to one of claims 9 or 10,
**characterised in that**
the pin is formed as a spring dowel sleeve.

12. Coupling hook according to claim 5,
**characterised in that**
the spring element (32) externally abuts the hook body (7), when moving the opening lever (126).

13. Coupling hook according to one of claims 5 or 12,
**characterised in that**
the spring element (32) is formed rod-like or leaf-spring-like and is retained with one side on the opening lever (126) and projects therefrom.

## Revendications

1. Crochet d'attelage (5, 105), notamment pour un bras oscillant inférieur d'une barre d'attelage à trois points (2) d'un tracteur (1),
avec un corps de crochet (7) qui
- comporte un évidement de palier (8) pour réceptionner une boule d'attelage (6) d'un engin à atteler,
- comporte un évidement (9),
- comporte un trou (10) entre l'évidement (9) et l'évidement de palier (8),
- comporte un orifice de sortie (11) qui est relié à l'évidement (9) et qui est ouvert sur l'environnement extérieur,
- comporte un élément d'appui (13) qui traverse l'orifice de sortie (11) et divise ce dernier en une première zone d'ouverture (14) et en une deuxième zone d'ouverture (15),
avec un cliquet de positionnement (17) qui
- est réglable entre une position de fermeture, dans laquelle il saillit dans l'évidement de palier (8) et une position d'ouverture dans laquelle il est retiré dans le trou (10),
avec un levier d'ouverture (26, 126) qui
- est relié de façon mobile en pivotement avec le cliquet de positionnement (17),
- à travers la première zone d'ouverture (14), dépasse vers l'extérieur par-dessus le corps du crochet (7)
**caractérisé en ce que** le levier d'ouverture (26, 126) comporte un tenon d'arrêt (28) qui immobilise le levier d'ouverture (26, 126) dans la position de maintien en le maintenant dans la deuxième zone d'ouverture (15) entre l'élément d'appui (13) et un rebord de délimitation de la deuxième zone d'ouverture (15) qui est opposé à ce dernier et évite un pivotement en retour du levier d'ouverture (26, 126) hors de sa position de maintien.

2. Crochet d'attelage selon la revendication 1
**caractérisé en ce qu'**on a prévu un élément d'arrêt (30, 33) qui s'accroche d'une part sur le corps du crochet (7) et d'autre part sur le crochet de positionnement (17) et les sollicite en position de fermeture,
et **en ce que** l'élément d'arrêt (30, 33) provoque une application de force qui assiste une introduction du tenon d'arrêt (28) dans la deuxième zone d'ouverture (15) .

3. Crochet d'attelage selon la revendication 1,
**caractérisé en ce que** le corps du crochet (7) comporte un premier élément d'appui (12) et un deuxième élément d'appui (13), le deuxième élément d'appui (13) étant l'élément d'appui qui traverse l'orifice de sortie (11) et divise ce dernier en une première zone d'ouverture (14) et en une deuxième zone d'ouverture et **en ce que** le premier élément d'appui est destiné à soutenir le cliquet de positionnement (17) dans la position de fermeture.

4. Crochet d'attelage selon la revendication 2,
**caractérisé en ce que** l'élément d'arrêt (30, 33) est relié au corps du crochet (7) et au cliquet de positionnement (17) de façon à ce qu'une ligne d'effet dynamique (K) définie par l'élément d'arrêt (30, 33) forme avec une ligne de liaison virtuelle (V) entre l'axe de pivotement (25) du levier d'ouverture (26, 126) formé par le deuxième élément d'appui (13) et le centre de l'élément de fixation (31) de l'élément d'arrêt (30, 33) sur le corps du crochet (7) un premier angle (A) de 10° à 14° en position de fermeture et un deuxième angle (B) de 0° à 4° en position de maintien.

5. Crochet d'attelage selon la revendication 1
**caractérisé en ce qu'**un élément à ressort (32), qui lors d'un déplacement du levier d'ouverture (126) empêche une introduction automatique du tenon d'arrêt (28) dans la deuxième zone d'ouverture (15) est associé au levier d'ouverture (126).

6. Crochet d'attelage selon l'une quelconque des revendications 2 à 5,
**caractérisé en ce que** l'élément d'arrêt est conçu sous la forme d'une ressort de traction cylindrique (30).

7. Crochet d'attelage selon la revendication 5,
**caractérisé en ce que** l'élément d'arrêt est constitué sous la forme d'un élément d'arrêt linéaire (33) pouvant être soumis sur un côté à un fluide sous pression, qui par application de pression peut être amené dans une position sortie et par relâchement de pression peut être ramené automatiquement dans la position rentrée initiale.

8. Crochet d'attelage selon la revendication 2,
**caractérisé en ce que** le levier d'ouverture comporte une encoche (29) délimitée sur un côté par le tenon d'arrêt (28), qui traverse le deuxième élément d'appui (13).

9. Crochet d'attelage selon la revendication 1,
**caractérisé en ce que** le deuxième élément d'appui (13) est constitué d'une goupille.

10. Crochet d'attelage selon la revendication 3,
**caractérisé en ce que** le premier élément d'appui (12) est constitué d'une goupille.

11. Crochet d'attelage selon l'une quelconque des revendications 9 ou 10,
**caractérisé en ce que** la goupille est conçue sous la forme d'une goupille de serrage.

12. Crochet d'attelage selon la revendication 5,
**caractérisé en ce que** lors d'un déplacement du levier d'ouverture (126), l'élément à ressort (32) s'appuie à l'extérieur sur le corps du crochet (7).

13. Crochet d'attelage selon l'une quelconque des revendications 5 ou 12,
**caractérisé en ce que** l'élément à ressort (32) est conçu sous la forme d'une tige ou d'un ressort à lame et est fixé d'un côté sur le levier d'ouverture (126) et dépasse de ce dernier.
